# EUROPÄISCHE PATENTSCHRIFT

(11) **EP 3 687 729 B1**
(45) Veröffentlichungstag und Bekanntmachung des Hinweises auf die Patenterteilung: **13.10.2021**
(21) Anmeldenummer: 18769292.6
(22) Anmeldetag: 27.08.2018
(51) Int. Cl.: B23K 20/10, B29C 65/08, B29C 65/00, H01R 43/02

(54) **VERFAHREN ZUR POSITIONIERUNG VON SCHWEISSGUT IN EINER ULTRASCHALL-SCHWEISSEINRICHTUNG SOWIE ULTRASCHALL-SCHWEISSEINRICHTUNG**
METHOD FOR POSITIONING WORKPIECE IN AN ULTRASONIC WELDING DEVICE AND ULTRASONIC WELDING DEVICE
PROCEDE DE POSITIONNEMENT D'UNE PIECE DE TRAVAIL DANS UN DISPOSITIF DE SOUDAGE PAR ULTRASONS ET DISPOSITIF DE SOUDAGE PAR ULTRASONS

(30) Priorität: 25.09.2017 DE 102017216988
(43) Veröffentlichungstag der Anmeldung: 05.08.2020
(73) Patentinhaber: Schunk Sonosystems GmbH, 35435 Wettenberg (DE)
(72) Erfinder: MUELLER, Stefan, 35580 Wetzlar (DE)
(74) Vertreter: advotec.
(86) Internationale Anmeldenummer: PCT/EP2018/072969
(87) Internationale Veröffentlichungsnummer: WO 2019/057443

(56) Entgegenhaltungen:
- WO-A2-2005/107994
- DE-U1-202015 008 931
- US-A1- 2014 338 814

## Beschreibung

Die vorliegende Erfindung betrifft ein Verfahren zur Positionierung von Schweißgut in einer Ultraschall-Schweißeinrichtung mit einer mit Ultraschallschwingungen beaufschlagten, Längsschwingungen ausführenden Sonotrode und einem Amboss, wobei zwischen einer Arbeitsfläche der Sonotrode und einer Gegenfläche des Amboss eine Schweißaufnahme gebildet ist, wobei mittels einer Wegmesseinrichtung eine Positionsänderung einer die Schweißposition des Schweißguts definierenden Positionseinrichtung in Längsrichtung der Sonotrode erfasst wird. Darüber hinaus betrifft die Erfindung eine Ultraschall-Schweißeinrichtung mit einer mit Ultraschallschwingungen eines Ultraschall-Generators beaufschlagten, Längsschwingungen ausführenden Sonotrode und einem Amboss, wobei zwischen einer Arbeitsfläche der Sonotrode und einer Gegenfläche des Amboss eine Schweißgutaufnahme gebildet ist, mit einer Positionseinrichtung zur Erfassung der Schweißposition des Schweißguts gegenüber der Arbeitsfläche in Längsrichtung der Sonotrode, wobei zur Erfassung der Schweißposition die Positionseinrichtung mit einer Wegmesseinrichtung versehen ist.

Ultraschall-Schweißeinrichtungen der eingangs genannten Art werden insbesondere bei Ultraschall-Schweißzangen zur Durchführung von Endverschweißungen an metallischen Rohrleitungen verwendet, wie sie beispielsweise als Fluidleitung an Kühlaggregaten, also insbesondere an Klimageräten oder Kühlschränken, durchgeführt werden. Derartige Endverschweißungen werden nach Befüllen eines die Fluidleitung umfassenden Kühlkreislaufes mit einem Kältemittel durchgeführt, derart, dass eine an einem freien Ende der Rohrleitung angeordnete Befüllarmatur gleichzeitig mit Durchtrennung der Endverschweißung vom Rohrleitungsende abgetrennt wird.

Um eine exakte Positionierung des in dem vorstehend erläuterten Anwendungsfall als Rohrleitung ausgebildeten Schweißguts zwischen der Arbeitsfläche der Sonotrode und der Gegenfläche des Amboss zu ermöglichen, ist an einem Gehäuse der Ultraschall-Schweißeinrichtung ein regelmäßig als Anschlag ausgebildete Positionseinrichtung vorgesehen, gegen die die Rohrleitung in der Schweißposition anliegt, so dass die axiale Position der Rohrleitung in Längsrichtung der Sonotrode definiert ist.

Da sowohl die Arbeitsfläche der Sonotrode als auch die Gegenfläche des Amboss im Betrieb aufgrund der durch die Ultraschallschwingungen zwischen dem Schweißgut und der Sonotrode sowie dem Amboss erzeugten Relativbewegungen einer Abnutzung unterliegen, ist es notwendig, die Schweißposition im Verlauf des Betriebs zu ändern. Dies erfolgt in der Regel durch eine Relativverstellung der als Anschlag ausgebildeten Positionseinrichtung in Längsrichtung der Sonotrode.

Zur Herstellung reproduzierbarer, in den Parametern gleichbleibend ausgebildeten Verschweißungen ist es daher insbesondere erforderlich, die Abhängigkeit der Größe der Schwingungsamplitude von der Schweißposition zu berücksichtigen und gegebenenfalls an der neuen Schweißposition eine geeignete Amplitudenkorrektur vorzunehmen, um sicherzustellen, dass unabhängig von der Schweißposition das Schweißgut mit gleich großer Schwindungsamplitude beaufschlagt wird.

Bislang wird die Amplitudenkorrektur, also die Änderung der Amplitude nach einer Änderung der Schweißposition, vom Bediener iterativ durchgeführt, derart, dass nach einer Änderung der Schweißposition das erzielte Schweißergebnis, also die Einhaltung festgelegter Schweißparameter an der Verschweißung geprüft und bei unzulässigen Abweichungen die Amplitude durch eine Änderung der Konverter-Einstellung verändert wird, um anschließend an einer nachfolgend hergestellten Verschweißung zu überprüfen, ob die durchgeführte Änderung zur Einhaltung erlaubter Parametertoleranzen ausreichend war. Hiermit ist ein erheblicher zeitlicher Aufwand verbunden, da sich während eines Schichtbetriebs infolge der hohen Anzahl durchgeführter Schweißvorgänge in der Regel eine drei- bis vierfache Änderung der Schweißposition als notwendig herausstellt. Verfahren und Ultraschall-Schweißvorrichtungen gemäß dem Stand der Technik sind beispielsweise in der WO 2005/107994 A2 oder der DE 20 2015 008931 U1 offenbart.

Der vorliegenden Erfindung liegt die Aufgabe zugrunde, ein Verfahren zur Positionierung von Schweißgut in einer Ultraschall-Schweißeinrichtung vorzuschlagen, das die Durchführung von Änderungen der Schweißposition bei gleichbleibender Qualität der Verschweißungen erleichtert. Darüber hinaus liegt der vorliegenden Erfindung die Aufgabe zugrunde, eine Ultraschall-Schweißvorrichtung vorzuschlagen, die die Durchführung eines entsprechenden Verfahrens ermöglicht.

Zur Lösung dieser Aufgabe weist das erfindungsgemäße Verfahren die Merkmale des Anspruchs 1 auf.

Erfindungsgemäß erfolgt in Abhängigkeit von der Positionsänderung Δx eine Änderung der Schwingungsbeaufschlagung der Sonotrode, derart, dass entsprechend einer Amplitudenkennlinie der Sonotrode eine Amplitudenänderung erfolgt.

Die Erfindung beruht auf der Erkenntnis, dass aufgrund der Materialeigenschaften und der Geometrie einer Sonotrode sich für unterschiedlich ausgebildete Sonotroden individuelle Amplitudenkennlinien ergeben, derart, dass die Schwingungsamplitude der Sonotrode in Längsrichtung der Sonotrode bzw. in Längsrichtung der Arbeitsfläche der Sonotrode sich ändert, wobei regelmäßig die Amplitude am freien Ende der Sonotrode bzw. an dem dem freien Ende der Sonotrode zugeordneten Ende der Arbeitsfläche ein Maximum und am gegenüberliegenden Ende der Arbeitsfläche ein relatives Minimum erreicht. Zwischen dem ortsabhängigen Maximum und Minimum der Amplitude ist der Amplitudenverlauf durch die Amplitudenkennlinie definiert.

Vorzugsweise erfolgt die Änderung der Schwingungsbeaufschlagung der Sonotrode durch eine Änderung der Steuerspannung eines Generators, der einen die Sonotrode mit Ultraschallschwingungen beaufschlagenden Konverter ansteuert.

Der Zeitpunkt zur Ausführung der Positionsänderung kann von unterschiedlichen Parametern abhängig gemacht werden.

Vorzugsweise besteht eine besonders einfache Art der Auslösung der Positionsänderung des Positionselements durch Vorgabe einer definierten Anzahl von Schweißvorgängen. So kann beispielsweise vorgegeben werden, dass jeweils nach tausend ausgeführten Schweißvorgängen eine Positionsänderung erfolgt, um letztendlich eine in Längsrichtung der Sonotrode möglichst gleichmäßige Abnutzung der Arbeitsfläche der Sonotrode und/oder der Gegenfläche des Amboss mit größtmöglicher Ausnutzung der jeweiligen Flächen zu erreichen.

Die einfachste Möglichkeit der Auslösung einer Positionsänderung kann durch Bestimmung des Zeitpunkts durch den Bediener der Ultraschall-Schweißeinrichtung erfolgen, wobei diese Möglichkeit insbesondere dann sinnvoll erscheint, wenn es sich um einen in der Ausführung von Schweißvorgängen mittels einer Ultraschall-Schweißeinrichtung erfahrenen Bediener handelt.

Die erfindungsgemäße Ultraschall-Schweißeinrichtung weist die Merkmale des Anspruchs 5 auf.

Erfindungsgemäß ist die Wegmesseinrichtung über einen Kennlinienprozessor mit einem Generator der Ultraschall-Schweißeinrichtung verbunden, derart, dass mittels des Kennlinienprozessors in Abhängigkeit von einer Positionsänderung Δx entsprechend der Amplitudenkennlinie der Sonotrode eine Amplitudenänderung erfolgt.

Der Kennlinienprozessor bietet die Möglichkeit, in einem dem Prozessor zugeordneten Speicher eine sonotrodenspezifische Amplitudenkennlinie als Funktion der Amplitudengröße über der Länge der Sonotrodenarbeitsfläche in Längsrichtung der Sonotrode zu hinterlegen und durch einen Vergleich zwischen der Amplitudengröße der nach der Positionsänderung gegebenen zweiten Schweißposition mit der Amplitudengröße an einer der Positionsänderung vorausgegangenen ersten Schweißposition eine Änderung der Amplitudengröße zu bestimmen, und beispielsweise durch eine entsprechende Änderung der Konvertereinstellung eine Anpassung der Amplitudengröße in der zweiten Schweißposition an die Amplitudengröße in der ersten Schweißposition durchzuführen.

Vorzugsweise ist der Kennlinienprozessor in einem Rechner ausgebildet ist, der an einen Generator angeschlossen ist, welcher einen die Sonotrode mit Ultraschallschwingungen beaufschlagenden Konverter ansteuert.

Nachfolgend wird anhand der Zeichnung eine Ausführungsform der Erfindung näher erläutert.

Es zeigen:
- **Fig. 1**: eine isometrische Darstellung einer mit einer Ultraschall-Schweißeinrichtung versehenen Schweißzange mit einer an einer zwischen einer Arbeitsfläche einer Sonotrode und einer Gegenfläche eines Amboss ausgebildeten Schweißgutaufnahme angeordneten Positionseinrichtung;
- **Fig. 2**: die in **Fig. 1** dargestellte Schweißgutaufnahme in vergrößerter Seitenansicht;
- **Fig. 3**: eine über einer Arbeitsfläche einer Sonotrode dargestellte Amplitudenkennlinie mit Darstellung des Amplitudenverlaufs in Längsrichtung der Arbeitsfläche;
- **Fig. 4**: eine schematische Darstellung der mit einer Wegmesseinrichtung versehenen Positionseinrichtung zur Definition einer Schweißposition in der Schweißgutaufnahme.

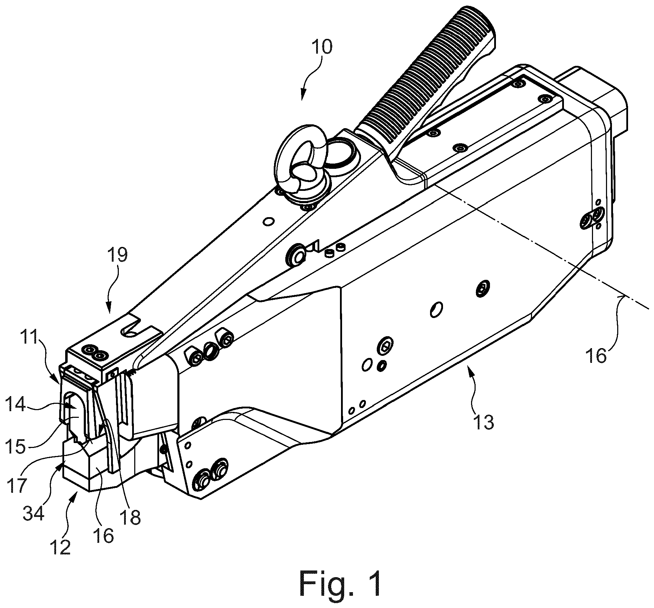

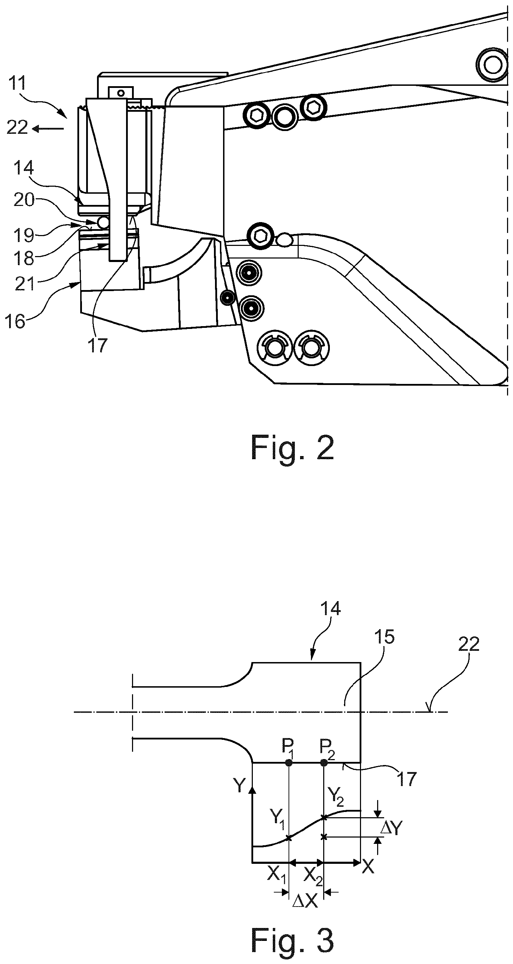

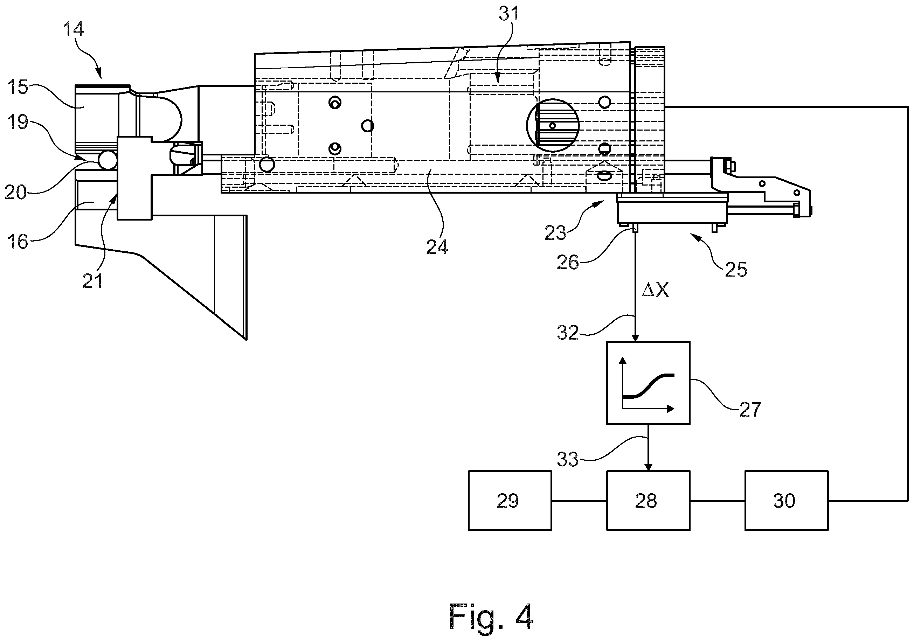

**Fig. 1** zeigt in isometrischer Darstellung eine Ultraschall-Schweißzange 10, die mit einer Ultraschall-Schweißeinrichtung 34 versehen ist und einen oberen Zangenteil 11 und einem unteren Zangenteil 12 aufweist, die in einem gemeinsamen Zangengehäuse 13 angeordnet sind. Das obere Zangenteil 11 weist eine insbesondere in **Fig. 4** ohne das Zangengehäuse 13 dargestellte Sonotrode 14 der Ultraschall-Schweißeinrichtung 34 auf, die mit einem Sonotrodenkopf 15 gegenüberliegend einem am unteren Zangenteil 12 ausgebildeten Amboss 16 der Ultraschall-Schweißeinrichtung 34 angeordnet ist, derart, dass zwischen einer Arbeitsfläche 17 der Sonotrode 14 und einer Gegenfläche 18 des Amboss 16 eine insbesondere in **Fig. 2** dargestellte Schweißgutaufnahme 19 gebildet ist.

Im Fall des dargestellten Ausführungsbeispiels ist der Amboss 16 mittels einer nicht näher dargestellten Betätigungseinrichtung um eine im hinteren Teil des Zangengehäuses 13 ausgebildete Schwenkachse 16 gegen den Sonotrodenkopf 15 der Sonotrode 14 verschwenkbar, derart, dass die auf dem Amboss 16 ausgebildete Gegenfläche 18 gegen die Arbeitsfläche 17 der Längsschwingungen ausführenden Sonotrode 14 bewegt werden kann.

Wie in **Fig. 2** dargestellt, dient die zwischen der Arbeitsfläche 17 der Sonotrode 14 und der Gegenfläche 18 des Amboss 16 ausgebildete Schweißgutaufnahme 19 zur Aufnahme eines im vorliegenden Fall als Metallröhrchen ausgeführten Schweißguts 20. Wie aus **Fig. 2** weiter ersichtlich, ist das obere Zangenteil 11 mit einer Positionseinrichtung 21 versehen, die in ihrer Relativposition in Längsrichtung 22 der Sonotrode 14 veränderbar ist, derart, dass die Positionseinrichtung 21 gegen das in einer Schweißposition P1 in der Schweißgutaufnahme 19 angeordnete Schweißgut 20, wie insbesondere auch in **Fig. 4** dargestellt, zur Anlage gebracht werden kann.

Wie **Fig. 4**, die die Ultraschall-Schweißeinrichtung 34 der Ultraschall-Schweißzange 10 ohne das in **Fig.1** dargestellte Zangengehäuse 13 zeigt, weiter zeigt, ist die Positionseinrichtung 21 mit einer Wegmesseinrichtung 23 versehen, die im vorliegenden Fall ein als Koppelstange 24 ausgebildetes Übertragungselement sowie eine über die Koppelstange 24 mit der Positionseinrichtung 21 verbundene Potenziometereinrichtung 25 aufweist.

Die in **Fig. 4** schematisch dargestellte Ultraschall-Schweißeinrichtung 34 weist einen mit einem Signalausgang 26 der Wegmesseinrichtung 23 verbundenen Kennlinienprozessor 27 auf, der im vorliegenden Fall an einen Generator 28 angeschlossen ist. Der Generator 28 ist mit einem Rechner 29 verbunden, der die Vorgabe definierter Schweißparameter ermöglicht. Entsprechend der Leistungsabgabe des Generators 28 werden mittels eines Konverters 30 Ultraschallschwingungen erzeugt, die schließlich über einen Booster 31, der eine Amplitudenverstärkung der mit dem Konverter 30 erzeugen Ultraschallschwingungen bewirkt, auf die Sonotrode 14 bzw. deren Arbeitsfläche 17 übertragen werden.

In dem Kennlinienprozessor 27 ist eine sonotrodenspezifische Amplitudenkennlinie als Funktion der Amplitudengröße über der Länge der Sonotrodenarbeitsfläche 17 in Längsrichtung 22 der Sonotrode 14 abgespeichert.

**Fig. 3** zeigt zur Erläuterung des vorstehenden Begriffs "sonotrodenspezifische Amplitudenkennlinie" den Amplitudenverlauf über der Arbeitsfläche 17 der Sonotrode 14, wobei deutlich wird, dass zwischen der in Längsrichtung 22 auf der Arbeitsfläche 17 verlaufenden Wegkoordinate x und der Amplitudengröße y ein eindeutiger funktionaler Zusammenhang besteht, so dass, wie beispielhaft in **Fig. 3** dargestellt, der Wegkoordinate x₁, die eine Schweißposition P₁ auf der Arbeitsfläche 17 definiert, eine Amplitudengröße y₁ zugeordnet werden kann, und einer Wegkoordinate x₂, die eine Schweißposition P₂ auf der Arbeitsfläche 17 definiert, eine Amplitudengröße y₂ zugeordnet werden kann. Zwischen den Positionen P₁ und P₂ liegt demnach eine der Positionsänderung Δx entsprechende Amplitudenänderung Δy, bei der es sich im vorliegenden Fall, wie **Fig. 3** verdeutlicht, um eine Amplitudenerhöhung handelt.

Der in **Fig. 4** schematisch dargestellte Kennlinienprozessor 27 kann die Leistungsabgabe des Generators 28 entsprechend der Amplitudenkennlinie steuern, also etwa durch eine Reduzierung der Spannung des Generators 28 mit entsprechender Verminderung der Leistungsabgabe des Generators 28 eine Reduzierung der Schwingungsamplitude des Konverters 30 bewirken. Hierzu erzeugt der Kennlinienprozessor 27 in Abhängigkeit von einem der Positionsänderung Δx entsprechenden Eingangssignal 32 ein der Amplitudendifferenz Δy entsprechendes Ausgangssignal 33, das die Leistungsabgabe des Generators 28 derart beeinflusst, dass an der Position P₂ eine der Amplitudenerhöhung Δy entsprechende Amplitudenreduktion - Δy erfolgt, so dass das in der Position P₂ angeordnete Schweißgut mit derselben Amplitude beaufschlagt wird, wie in der Position P₁. Damit wird die Amplitudenänderung Δy entsprechend der sonotrodenspezifischen Amplitudenkennlinie kompensiert, so dass Schweißungen unabhängig von der Schweißposition P₁ oder P₂ stets mit derselben Amplitude ausgeführt werden können.

Abweichend von der schematischen Darstellung in **Fig. 4** kann der Kennlinienprozessor auch funktional in den Rechner 29 integriert sein, so dass zur Realisierung der Ultraschall-Schweißeinrichtung das der Positionsänderung Δx entsprechende Eingangssignal auch direkt als Eingangsgröße dem Rechner 29 zugeführt werden kann.

## Patentansprüche

1. Verfahren zur Positionierung von Schweißgut (20) in einer Ultraschall-Schweißeinrichtung (34) mit einer mit Ultraschallschwingungen beaufschlagten, Längsschwingungen ausführenden Sonotrode (14) und einem Amboss (16), wobei zwischen einer Arbeitsfläche (17) der Sonotrode (14) und einer Gegenfläche (18) des Amboss (16) eine Schweißaufnahme (19) gebildet ist, wobei mittels einer Wegmesseinrichtung eine Positionsänderung Δx einer die Schweißposition P des Schweißguts (20) definierenden Positionseinrichtung (21) in Längsrichtung (22) der Sonotrode (14) erfasst wird,
**dadurch gekennzeichnet,**
**dass** in Abhängigkeit von der Positionsänderung Δx eine Änderung der Schwingungsbeaufschlagung der Sonotrode (14) erfolgt, derart, dass entsprechend einer Amplitudenkennlinie der Sonotrode (14) eine Amplitudenänderung Δy erfolgt.

2. Verfahren nach Anspruch 1,
**dadurch gekennzeichnet,**
**dass** die Änderung der Schwingungsbeaufschlagung der Sonotrode (14) durch eine Änderung der elektrischen Spannung eines Generators (28) erfolgt, der einen die Sonotrode (14) mit Ultraschallschwingungen beaufschlagenden Konverter (30) ansteuert.

3. Verfahren nach Anspruch 1 oder 2,
**dadurch gekennzeichnet,**
**dass** die Positionsänderung Δx mit entsprechender Amplitudenänderung Δy in Abhängigkeit von einer definierten Anzahl von Schweißungen erfolgt.

4. Verfahren nach Anspruch 1 oder 2,
**dadurch gekennzeichnet,**
**dass** die Positionsänderung Δx mit entsprechender Amplitudenänderung Δy nach Auslösung einer Positionsänderung durch einen Bediener der Ultraschall-Schweißeinrichtung erfolgt.

5. Ultraschall-Schweißeinrichtung (34) mit einer mit Ultraschallschwingungen beaufschlagten, Längsschwingungen ausführenden Sonotrode (14) und einem Amboss (16), wobei zwischen einer Arbeitsfläche (17) der Sonotrode (14) und einer Gegenfläche (18) des Amboss (16) eine Schweißgutaufnahme (19) gebildet ist, mit einer Positionseinrichtung (21) zur Erfassung der Schweißposition P des Schweißguts(20) gegenüber der Arbeitsfläche (17) in Längsrichtung (22) der Sonotrode (14), wobei zur Erfassung der Schweißposition P die Positionseinrichtung (21) mit einer Wegmesseinrichtung (23) versehen ist,
**dadurch gekennzeichnet,**
**dass** die Wegmesseinrichtung (23) über einen Kennlinienprozessor (27) mit einem Generator (28) der Ultraschall-Schweißeinrichtung (34) verbunden ist, derart, dass mittels des Kennlinienprozessors (27) in Abhängigkeit von einer Positionsänderung Δx entsprechend der Amplitudenkennlinie der Sonotrode (14) eine Amplitudenänderung Δy erfolgt.

6. Ultraschall-Schweißeinrichtung (34) nach Anspruch 5,
**dadurch gekennzeichnet,**
**dass** der Kennlinienprozessor (27) in einem Rechner (29) ausgebildet ist, der an einen Generator (28) angeschlossen ist, welcher einen die Sonotrode (14) mit Ultraschallschwingungen beaufschlagenden Konverter (30) ansteuert.

## Claims

1. A method for positioning weldments (20) in an ultrasonic welding device (34) comprising a sonotrode (14), to which ultrasonic vibrations are applied and which emits longitudinal vibrations, and an anvil (16), a weldment accommodation (19) being formed between a work surface (17) of the sonotrode (14) and an opposing surface (18) of the anvil (16), a change in position Δx of a positioning device (21) defining weld position P of the weldment (20) being captured in the longitudinal direction (22) of the sonotrode (14) by means of a position sensor,
**characterized in that**
the application of vibrations to the sonotrode (14) is changed such depending on the change in position Δx that a change in amplitude Δy is performed according to an amplitude characteristic curve of the sonotrode (14).

2. The method according to claim 1,
**characterized in that**
the application of vibrations to the sonotrode (14) is changed due to a change in the electric voltage of a generator (28) which controls a converter (30) which applies ultrasonic vibrations to the sonotrode (14).

3. The method according to claim 1 or 2,
**characterized in that**
the change in position Δx is performed in conjunction with a corresponding change in amplitude Δy depending on a defined number of welds.

4. The method according to claim 1 or 2,
**characterized in that**
the change in position Δx is performed in conjunction with a corresponding change in amplitude Δy after a change in position has been triggered by a user of the ultrasonic welding device.

5. An ultrasonic welding device (34) comprising a sonotrode (14), to which ultrasonic vibrations are applied and which emits longitudinal vibrations, and an anvil (16), a weldment accommodation (19) being formed between a work surface (17) of the sonotrode (14) and an opposing surface (18) of the anvil (16), the ultrasonic welding device (34) comprising a positioning device (21) for capturing weld position P of the weldment (20) with respect to the work surface (17) in the longitudinal direction (22) of the sonotrode (14), the positioning device (21) being provided with a position sensor (23) for capturing weld position P,
**characterized in that**
the position sensor (23) is connected to a generator (28) of the ultrasonic welding device (34) via a characteristic curve processor (27) in such a manner that a change in amplitude Δy is performed according to the amplitude characteristic curve of the sonotrode (14) by means of the characteristic curve processor (27) depending on a change in position Δx.

6. The ultrasonic device (34) according to claim 5,
**characterized in that**
the characteristic curve processor (27) is developed in a computer (29) which is connected to a generator (28) which controls a converter (30) which applies ultrasonic vibrations to the sonotrode (14).

## Revendications

1. Procédé pour le positionnement du matière à souder (20) dans un dispositif de soudage ultrasonique (34) comprenant une sonotrode (14), qui est soumise à des vibrations ultrasoniques et qui émet des vibrations longitudinales, et une enclume (16), une réception de soudure (19) étant formée entre une surface de travail (17) de la sonotrode (14) et une surface opposée (18) de l'enclume (16), un changement de position Δx d'un dispositif de positionnement (21) définissant la position de soudure P du matière à souder (20) étant saisi dans le sens longitudinal (22) de la sonotrode (14) au moyen d'un capteur de position,
**caractérisé en ce que**
la soumission de la sonotrode (14) à des vibration est changée de telle manière en fonction du changement de position Δx qu'un changement d'amplitude Δy est effectué selon une courbe caractéristique d'amplitude de la sonotrode (14).

2. Procédé selon la revendication 1,
**caractérisé en ce que**
la soumission de la sonotrode (14) à des vibrations est changée à cause d'un changement de la tension électrique d'un générateur (28) qui contrôle un convertisseur (30) qui soumet la sonotrode (14) à des vibrations ultrasoniques.

3. Procédé selon la revendication 1 ou 2,
**caractérisé en ce que**
le changement de position Δx est effectué en combinaison avec un changement d'amplitude Δy correspondant en fonction d'une quantité définie de soudures.

4. Procédé selon la revendication 1 ou 2,
**caractérisé en ce que**
le changement de position Δx est effectué en combinaison avec un changement d'amplitude Δy correspondant après un changement de position a été déclenché par un utilisateur du dispositif de soudage ultrasonique.

5. Dispositif de soudage ultrasonique (34) comprenant une sonotrode (14), qui est soumise à des vibrations ultrasoniques et qui émet des vibrations longitudinales, et une enclume (16), une réception de soudure (19) étant formée entre une surface de travail (17) de la sonotrode (14) et une surface opposée (18) de l'enclume (16), le dispositif de soudage ultrasonique (34) comprenant un dispositif de positionnement (21) pour la saisie de la position de soudure P du matière à souder (20) par rapport à la surface de travail (17) dans le sens longitudinal (22) de la sonotrode (14), le dispositif de positionnement (21) étant pourvu d'un capteur de position (23) pour la saisie de la position de soudure P,
**caractérisé en ce que**
le capteur de position (23) est relié à un générateur (28) du dispositif de soudage ultrasonique (34) par un processeur de courbe caractéristique (27) de telle manière qu'un changement d'amplitude Δy est effectué selon la courbe caractéristique d'amplitude de la sonotrode (14) au moyen du processeur de courbe caractéristique (27) en fonction d'un changement de position Δx.

6. Dispositif ultrasonique (34) selon la revendication 5, **caractérisé en ce que**
le processeur de courbe caractéristique (27) est formé dans un ordinateur (29) qui est relié à un générateur (28) qui contrôle un convertisseur (30) qui soumet la sonotrode (14) à des vibrations ultrasoniques.
